# EUROPÄISCHE PATENTSCHRIFT

(11) **EP 1 564 966 B1**
(45) Veröffentlichungstag und Bekanntmachung des Hinweises auf die Patenterteilung: **30.05.2007**
(21) Anmeldenummer: 05100090.9
(22) Anmeldetag: 10.01.2005
(51) Int. Cl.: H04L 29/08

(54) **System, Vorrichtung und Verfahren zum Verarbeiten einer zwischen einem Mobilfunknetz und einem Peer-to-peer-Festnetz ausgetauschten Nachricht**
System, apparatus and method for processing a message exchanged between a mobile network and a peer-to-peer fixed-line network.
Système, dispositif et procédé pour le traitement des messages échangés entre un réseau mobile et un réseau fixe poste à poste

(30) Priorität: 23.01.2004 DE 102004003550
(43) Veröffentlichungstag der Anmeldung: 17.08.2005
(73) Patentinhaber: SIEMENS AKTIENGESELLSCHAFT, 80333 München (DE)
(72) Erfinder: Andersen, Frank-Uwe, 10625 Berlin (DE); Finkenzeller, Michael, 81373 München (DE); Grimminger, Jochen, 80638 München (DE)

(56) Entgegenhaltungen:
- WO-A-98/47270
- WO-A-03/003694

## Beschreibung

Kommunikationssystem, Nachrichtenwandlungs-Rechner und Verfahren zum Verarbeiten einer zwischen einem Mobilfunkendgerät eines Mobilfunk-Kommunikationsnetzes und einem Nachrichtenwandlungs-Rechner ausgetauschten Mobilfunk-Nachricht

Die Erfindung betrifft ein Kommunikationssystem, einen Nachrichtenwandlungs-Rechner und Verfahren zum Verarbeiten einer zwischen einem Mobilfunkendgerät eines Mobilfunk-Kommunikationsnetzes und einem Nachrichtenwandlungs-Rechner ausgetauschten Mobilfunk-Nachricht. Es ist bekannt, dass Peer-to-Peer-Dienste von miteinander mittels eines Festnetz-Kommunikationsnetzes gekoppelten Rechnern bereitgestellt werden. Die Kommunikation in dem Festnetz-Kommunikationsnetz erfolgt üblicherweise gemäß dem Internet Protocol (IP) und dem Transport Control Protocol (TCP)/User Datagram Protocol (UDP) sowie gemäß dem jeweils verwendeten Peer-to-Peer-Dienst zugeordneten Peer-to-Peer-Protokoll.

Heutige Mobilfunkendgeräte sind für eine direkte Teilnahme an bekannten Peer-to-Peer-Netzwerken aus mehreren Gründen ungeeignet.

Eine Mobilfunk-Kommunikationsverbindung ist derzeit bei einem Mobilfunk-Kommunikationsnetz, welches gemäß dem GSM-Standard oder einem anderen Mobilfunk-Standard der dritten Generation eingerichtet ist, wie beispielsweise GPRS, sehr niederbitratig.

Ferner ist der in heutigen Mobilfunkendgeräten verfügbare Speicherplatz sehr begrenzt und es ist auch in Zukunft nicht absehbar, dass ein Mobilfunkendgerät eine Speicherplatzkapazität von einigen Gigabyte bereitstellen kann, wie sie beispielweise bei heutzutage üblichen Personal-Computern verfügbar ist. Die Teilnahme eines Mobilfunkendgerätes an einem Peer-to-Peer-Netzwerk verursacht unwirtschaftlich hohe Kosten beim Benutzer des Mobilfunkendgerätes, da die Suchalgorithmen zum Ermitteln der gewünschten elektronischen Peer-to-Peer-Dateien die Kapazität eines üblichen Mobilfunkendgerätes vollständig belegen würden.

Der angeforderte Inhalt kann darüber hinaus auf dem Mobilfunkendgerät selbst häufig nicht verwendet bzw. ausgeführt werden, insbesondere aufgrund von Benutzer-Schnittstellen-Limitationen wie einem fehlenden Bildschirm für Video, zu geringer Grafik-Leistung, keinen oder schlechten Lautsprechern, usw.

Die Teilnahme von Mobilfunkendgeräten an Peer-to-Peer-Diensten ist auch aufgrund von technischen Gegebenheiten zur Zeit noch nicht möglich. Dies liegt einerseits an dem sogenannten Bootstrapping-Mechanismus für Peer-to-Peer-Dienste sowie fehlende Multicast-Unterstützung sowie administrativ oft nicht mögliche passive Erreichbarkeit für IP-Datenpakete, dies bedeutet fehlende Server-Funktion von Mobilfunkendgeräten.

Mit der MMS (Multimedia Message Service), spezifiziert in "WAP-205-MMSArchOverview-20010425-a", ist jedoch eine Möglichkeit bekannt, Multimedia-Daten zwischen einzelnen Mobilfunkendgeräten auszutauschen als auch solche Multimedia-Daten von einem Mobilfunkendgerät an einen E-Mail-Empfänger in einem Festnetz-Kommunikationsnetz und umgekehrt zu versenden. Für das Senden von Multimedia Daten von einem Teilnehmer, d.h. Rechner, im Internet zu einem Mobilfunkendgerät mit MMS-Funktionalität gibt es spezielle "Web-Portale", die von dem Betreiber des Mobilfunk-Kommunikationsnetzes bereitgestellt werden, die das Zusammenstellen einer MMS-Nachricht erlauben.

Hierzu ist eine Schnittstelle zum Austausch von Daten von einem Mobilfunkendgerät und Teilnehmern im Internet, d.h. einem Rechner in dem Festnetz-Kommunikationsnetz spezifiziert. Die MMS-Architektur besteht aus einem sogenannten MMS-Client, der über die MMS_{M}-Schnittstelle an einen als MMS-Proxy Relay bezeichneten Rechner im Mobilfunk-Kommunikationsnetz angebunden ist. Dieser übernimmt für den Fall, dass die Zieladresse eine E.164-konforme Adresse ist, die Weiterleitung von Daten zu einem weiteren Rechner (MMS-Server) über die MMS_{S}-Schnittstelle. Wird von dem Benutzer des Mobilfunkendgerätes als Zieladresse eine E-Mail-Adresse eingegeben, dann erfolgt die Weiterleitung der Daten von dem MMS-Proxy Relay über eine in der Spezifikation mit "E" bezeichnete Schnittstelle an einen beliebigen als E-Mail-Server dienenden Rechner im Festnetz-Kommunikationsnetz (Internet).

Derzeit ist ein Versenden von Daten, insbesondere Multimedia-Dateien, von einem Mobilfunkendgerät an einen Rechner im Festnetz-Kommunikationsnetz nur mittels einer E-Mail möglich. Ein Datenaustausch von einem Rechner in dem Festnetz-Kommunikationsnetz zu einem Mobilfunkendgerät ist nicht vorgesehen.

Es ist Aufgabe der vorliegenden Erfindung, Mobilfunkendgeräten die Teilnahme an einem Peer-to-Peer-Netzwerk auf kostengünstige und wirtschaftlich praktikable Weise zu ermöglichen.

Diese Aufgabe wird durch ein Kommunikationssystem mit den Merkmalen des Patentanspruches 1, durch einen Nachrichtenwandlungs-Rechner mit den Merkmalen des Patentanspruches 12 sowie durch die Verfahren zum Verarbeiten einer zwischen einem Mobilfunkendgerät eines Mobilfunk-Kommunikationsnetzes und einem Nachrichtenwandlungs-Rechner ausgetauschten Mobilfunk-Nachricht gemäß den Patentansprüchen 13 und 14 gelöst. Vorteilhafte Ausgestaltungen ergeben sich aus den abhängigen Patentansprüchen.

Das erfindungsgemäße Kommunikationssystem weist ein Mobilfunk-Kommunikationsnetz mit zumindest einem Mobilfunkendgerät, ein Festnetz-Kommunikationsnetz mit zumindest einem Rechner und ein zumindest einen Rechner aufweisendes Vermittlungsnetzwerk auf. Dieses ist mit dem Festnetz-Kommunikationsnetz und dem Mobilfunk-Kommunikationsnetz gekoppelt. Es weist eine Einrichtung auf, die derart ausgestaltet ist, um aus einer Mobilfunk-Nachricht eine Peer-to-Peer-Nachricht gemäß einem Peer-to-Peer-Kommunikationsprotokoll zu bilden, so dass diese an einen Rechner des Festnetz-Kommunikationsnetzes übertragbar ist und/oder aus einer von einem Mobilfunkendgerät angeforderten Peer-to-Peer-Nachricht eine Mobilfunk-Nachricht gemäß einem Mobilfunk-Kommunikationsprotokoll zu bilden, so dass die Mobilfunk-Nachricht an das Mobilfunkendgerät übertragbar ist.

Der erfindungsgemäße Nachrichtenwandlungs-Rechner ist derart eingerichtet, dass dieser aus einer Mobilfunk-Nachricht eine Peer-to-Peer-Nachricht gemäß einem Peer-to-Peer-Kommunikationsprotokoll bildet, so dass diese an einen Rechner des Festnetz-Kommunikationsnetzes übertragbar ist und/oder aus einer von einem Mobilfunkendgerät angeforderten Peer-to-Peer-Nachricht eine Mobilfunk-Nachricht gemäß einem Mobilfunk-Kommunikationsprotokoll bildet, so dass die Mobilfunk-Nachricht an das Mobilfunkendgerät übertragbar ist.

Bei der Mobilfunk-Nachricht handelt es sich bevorzugt um eine MMS gemäß 3G-TS 22.140. Die Erfindung lässt sich somit darin sehen, dass der Nachrichtenwandlungs-Rechner eine Umsetzung einer MMS vornimmt, die an einen E-Mail-Empfänger gerichtet ist, und einem Peer-to-Peer-Dienst zur Verfügung stellt, so dass die Inhalte der MMS auffindbar gemacht werden. Dabei wird die eingangs genannte Schnittstelle "E" zur Datenübertragung von einem MMS-fähigen Mobilfunkendgerät zu einem der Peer-to-Peer-Dienste genutzt. Das Mobilfunkendgerät versendet die Nachricht an die E-Mail-Adresse eines Peer-to-Peer-Proxy-Rechners eines Peer-to-Peer-Dienstes, der in der Lage ist, die als MMS vorliegende Mobilfunk-Nachricht umzuwandeln und die Peer-to-Peer-Funktionalität zu integrieren. Alternativ kann die Mobilfunknachricht durch den Nachrichtenwandlungs-Rechner auch per http-upload nach der sog. "post"-Methode entgegengenommen werden.

Bei dem erfindungsgemäßen Verfahren zum Verarbeiten einer von einem Mobilfunkendgerät eines Mobilfunk-Kommunikationsnetzes einem Nachrichtenwandlungs-Rechner zugeführten Mobilfunk-Nachricht wird aus einer Mobilfunk-Nachricht eine Peer-to-Peer-Nachricht gemäß einem Peer-to-Peer-Kommunikationsprotokoll gebildet und diese Peer-to-Peer-Nachricht wird an einen Rechner des Festnetz-Kommunikationsnetzes übertragen.

Bei einem anderen Verfahren zum Verarbeiten einer von einem Rechner eines Festnetz-Kommunikationsnetzes einem Nachrichtenwandlungs-Rechner zugeführten Peer-to-Peer-Nachricht wird aus einer von einem Mobilfunkendgerät angeforderten Peer-to-Peer-Nachricht eine Mobilfunk-Nachricht gemäß einem Mobilfunk-Kommunikationsprotokoll gebildet und die Mobilfunk-Nachricht an das Mobilfunkendgerät übertragen.

Gemäß einer vorteilhaften Ausgestaltung ist die Einrichtung ausgestaltet, eine Anforderungsnachricht seitens eines Mobilfunkendgerätes, in der eine oder mehrere Peer-to-Peer-Nachrichten angefordert werden, zu ermitteln, und diese von einem der Rechner des Festnetz-Kommunikationsnetzes anzufordern und zwischenzuspeichern. Es wird dabei davon ausgegangen, dass ein Mobilfunkendgerät eine Suchanfrage an einen Peer-to-Peer-Dienst über einen im Netz des Mobilfunknetz-Betreibers vorhandenen Peer-to-Peer-Proxy-Rechners abgesetzt hat. Empfänger dieser Suchanfrage soll das Mobilfunkendgerät selbst sein. Über den normalen Funktionsumfang eines Peer-to-Peer-Proxy-Rechners weist die Einrichtung damit folgende Eigenschaften auf:

Ein Peer-to-Peer-Dienst-spezifisches Modul ermöglicht es, Antworten eines bestimmten Peer-to-Peer-Dienstes zu interpretieren und einen Download der gefundenen bzw. angeforderten Daten durchzuführen und lokal zu speichern. Bei bekannten

Vorgehensweisen würde üblicherweise ein Download und eine Nutzung der gefundenen Daten später über das Festnetz erfolgen. Bei diesem Vorgehen wird lediglich die Suchanfrage über das Mobilfunkendgerät und eine Benachrichtigung über die erfolgreiche Suche geführt. Die Erfindung ermöglicht es nun, die von den Peer-to-Peer-Dienst bereit gestellten Daten tatsächlich auf dem Mobilfunkendgerät verfügbar zu machen. Die Daten können anhand von benutzerspezifischen Einstellungen, z.B. Profilen wie dem User Agent Profile (UAProf, beschrieben in WAP-Forum WAG) weiter behandelt werden, um dem Nutzer des Mobilfunkendgerätes die Nutzung der Daten zu erlauben oder eine Vorschau zu ermöglichen. Die Einrichtung überprüft, ob die angeforderten Daten auf dem Mobilfunkendgerät des Benutzers darstellbar sind und führt gegebenenfalls eine Konvertierung dieser Daten durch. Zum Beispiel könnte ein großes Bild in ein darstellbares kleineres Bild umwandelt werden.

Bevorzugt ist die Einrichtung deshalb in einem Zwischenspeicher-Rechner des Vermittlungsnetzwerkes angeordnet, der mit dem Festnetz-Kommunikationsnetz gekoppelt ist. Bei diesem Zwischenspeicher-Rechner handelt es sich bevorzugt um einen Peer-to-Peer-Proxy-Rechner.

In einer weiteren Ausgestaltung ist der Zwischenspeicher-Rechner mit einem ersten Schnittstellen-Rechner gekoppelt, der eine an einen E-Mail-Empfänger gerichtete Mobilfunk-Nachricht von einem Mobilfunkendgerät empfängt und dem Zwischenspeicher-Rechner zuführt. Der erste Schnittstellen-Rechner stellt bevorzugt den eingangs erwähnten MMS-Proxy-Relay-Rechner dar, der durch den Betreiber des Mobilfunk-Kommunikationsnetzes eingerichtet ist.

Zweckmäßigerweise ist der Zwischenspeicher-Rechner mit einem zweiten Schnittstellen-Rechner gekoppelt, der die Mobilfunk-Nachricht oder eine Information über die Zieladresse der angeforderten Mobilfunk-Nachricht an das anfordernde Mobilfunkendgerät sendet. Der zweite Schnittstellen-Rechner ist bevorzugt als MMS-Server ausgebildet, wie er im Stand der Technik bereits bekannt ist.

Die die Datenkonvertierung vornehmende Einrichtung ist bevorzugt derart ausgestaltet, dass sie die Dateianhänge der Mobilfunk-Nachricht von derselben separieren kann.

Sie ist bevorzugt derart ausgestaltet, dass sie aus der Mobilfunknachricht Peer-to-Peer-Kontexte mit Objekt und Beschreibung erzeugen kann.

Bevorzugt ist es auch, wenn die Einrichtung derart ausgestaltet ist, dass sie die Mobilfunk-Nachricht einem bestimmten Peer-to-Peer-System zuordnen kann.

Es ist weiter bevorzugt, wenn die Einrichtung derart ausgestaltet ist, dass sie bei der Wandlung der Peer-to-Peer-Nachricht in die Mobilfunk-Nachricht die Eingabe-/Ausgabefähigkeiten des die Nachricht anfordernden Mobilfunkendgerätes berücksichtigt. Gemäß einer weiteren Ausgestaltung ist vorgesehen, dass die Einrichtung vor dem Senden der Mobilfunk-Nachricht ermittelt, ob der Kontext der Peer-to-Peer-Nachricht an das Mobilfunkendgerät mit übermittelt werden soll.

Die Erfindung löst auf die beschriebene Weise das Problem, den Austausch von Inhalten bzw. Daten zwischen einer Mobilfunknachricht, bevorzugt einer MMS, und einem Peer-to-Peer-Dienst zu ermöglichen. Die Erfindung bedient sich dabei eines Peer-to-Peer-Proxy-Rechners, der in der Lage ist, als Stellvertreter für beliebige Mobilfunkendgeräte Peer-to-Peer-Sitzungen zu instantiieren, einschließlich der lokalen Datenhaltung sowie der Steuerung der Sitzung über Mobilfunk-Nachrichten wie z.B. SMS oder WAP oder auch http. Mittels eines derartigen Rechners wird die Peer-to-Peer-Sitzung bislang lediglich über die Luftschnittstelle gesteuert, aber ausschließlich zwischen Rechnern im Festnetz-Kommunikationsnetz realisiert, da von einem Mobilfunkendgerät anforderte Daten zu einem späteren Zeitpunkt über einen anderen Rechner im Festnetz-Kommunikationsnetz abgerufen werden. Die Erfindung nutzt diesen Rechner für die Konvertierung von Mobilfunk-Nachrichten in Peer-to-Peer-Nachrichten gemäß einem Peer-to-Peer-Kommuikationsprotokoll und umgekehrt, in dem die Funktionalität dieses Rechners erweitert wird.

Die erfindungsgemäße Einrichtung ermöglicht es, die von einem Mobilfunkendgerät übermittelten Daten innerhalb der Mobilfunk-Nachricht zu erkennen. Diese aus der Mobilfunk-Nachricht separierten Informationen werden in eine Benutzer-unabhängige Peer-to-Peer-Sitzung übernommen und dem Peer-to-Peer-Netz zur Verfügung gestellt. Hierdurch wird der Inhalt der Mobilfunk-Nachricht in bestehende Peer-to-Peer-Systeme integriert und ist dadurch lexikalisch auffindbar. Änderungen beim Mobilfunkendgerät oder bei der Art der Datenübertragung gegenüber bekannten Vorgehensweisen sind nicht notwendig.

Im Rahmen der Übertragung einer Peer-to-Peer-Nachricht an ein Mobilfunk-Telefon wird ebenfalls die Funktionalität eines Peer-to-Peer-Proxy-Rechners verwendet. Es wird dabei davon ausgegangen, dass eine Suchanfrage eines Mobilfunkendgerätes an einen Peer-to-Peer-Dienst bereits getätigt wurde. Die erfindungsgemäße Einrichtung ermöglicht es, die Antwort des Peer-to-Peer-Dienstes zu interpretieren, so dass das Mobilfunkendgerät die aufgefundenen Daten abrufen kann. Alternativ können die aufgefundenen Daten in den Peer-to-Peer-Proxy-Rechner lokal gespeichert werden, wobei das Mobilfunkendgerät eine Nachricht über die lokale Datenablage erhält, so dass es seinerseits ein Abrufen der Daten veranlassen kann. Um die Nutzung in dem Mobilfunkendgerät zu ermöglichen, führt die Einrichtung eine Prüfung durch, ob die angeforderten Daten auf diesem speicher- und darstellbar sind. Gegebenenfalls wird durch die Einrichtung eine Konvertierung durchgeführt.

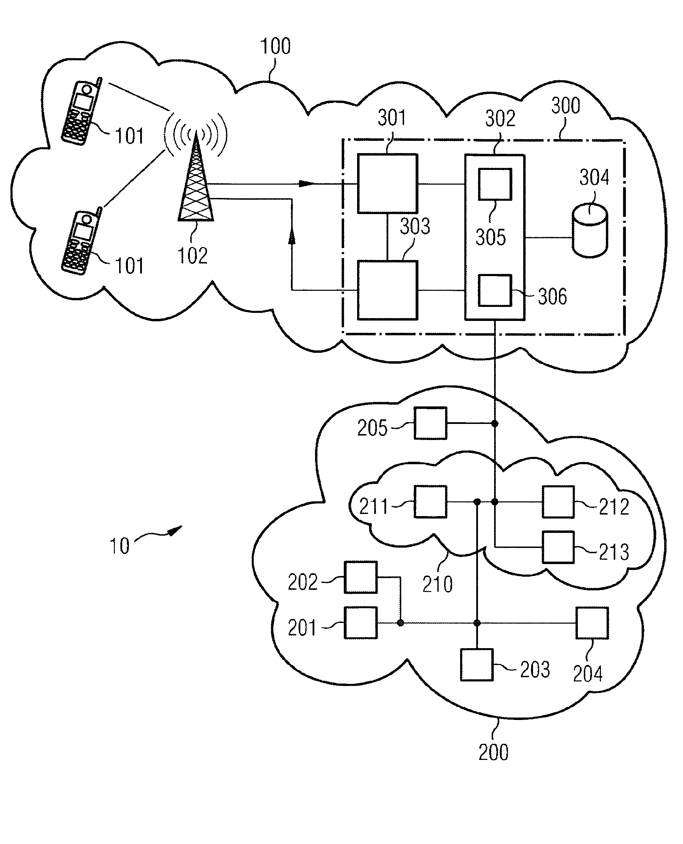

Ein Ausführungsbeispiel der Erfindung ist in der Figur dargestellt und wird im Folgenden näher erläutert.

Die Erfindung zeigt ein erfindungsgemäßes Kommunikationssystem 10 mit einem Mobilfunk-Kommunikationsnetz 100 und einem Festnetz-Kommunikationsnetz 200. Das Kommunikationsnetz 10 ermöglicht es insbesondere MMS-fähigen Mobilfunkendgeräten, z.B. lokal erzeugte Videos, Fotos, Sound- oder Textdateien, einem Peer-to-Peer-Dienst zur Verfügung zu stellen und diese Inhalte innerhalb des Peer-to-Peer-Netzwerkes auffindbar, z.B. durch eine Namensgebung, zu machen. Das Kommunikationssystem 10 ermöglicht es weiterhin, auf Anforderungs-Nachrichten (Suchanfrage) eines Mobilfunkendgerätes, das insbesondere MMS-fähig ist, zu bearbeiten, und die entsprechend angeforderten Dateien dem Mobilfunkendgerät in einer für ihn lesbaren Art und Weise zur Verfügung zu stellen.

In dem Festnetz-Kommunikationsnetz 200 sind eine Vielzahl von Rechnern 201, 202, 203, 204, 205, 211, 212, 213 vorgesehen, die miteinander gekoppelt sind und zur Kommunikation das Internet Protocol (IP) und das Transport Control Protocol (TCP) verwenden. Das Festnetz-Kommunikationsnetz 200 basiert damit auf Internet-Protokollen.

Ferner sind in den Festnetz-Rechnern 211, 212, 213 Peer-to-Peer-Dienste in frei vorgebbarer Weise installiert, wobei zumindest einige von diesen zusätzlich Peer-to-Peer-Dienste bereitstellen und in Anspruch nehmen können. Prinzipiell sind dabei beliebige Peer-to-Peer-Dienste und Peer-to-Peer-Kommunikationsprotokolle denkbar.

Die Festnetz-Rechner 211, 212, 213 bilden ein sogenanntes generisches Peer-to-Peer-Netzwerk. Dies ist ein virtuelles Netzwerk von Rechnern, die gemäß dem jeweiligen Peer-to-Peer-Dienst oder dem jeweiligen Peer-to-Peer-Kommunikationsprotokoll miteinander kommunizieren können.

In dem Mobilfunk-Kommunikationsnetz 100 ist eine Vielzahl von Mobilfunkendgeräten 101 vorgesehen, welche zur Bereitstellung oder zur Inanspruchnahme von Peer-to-Peer-Diensten eingerichtet sind. Die Mobilfunkendgeräte 101 sind über eine Funkverbindung mit einer Basisstation 102 gekoppelt. Die zum Beispiel beim UMTS-Standard notwendigen SGSN-Rechner und GGSN-Rechner sind der Einfachheit halber in der Figur weggelassen worden.

Das Mobilfunk-Kommunikationsnetz 100 weist weiterhin ein Vermittlungsnetzwerk 300 auf. Dieses umfasst einen ersten Schnittstellenrechner 301, der mit einem Zwischenspeicher-Rechner 302 sowie mit einem zweiten Schnittstellen-Rechner 303 verbunden ist. Dieser ist ebenfalls mit dem Zwischenspeicher-Rechner verbunden. Das Vermittlungsnetzwerk 300 ist auch mit dem Festnetz-Kommunikationsnetz 200 gekoppelt. Der Zwischenspeicher-Rechner 302 ist darüber hinaus mit einem Speicher 304, der beliebiger Art sein kann, verbunden.

Der erste Schnittstellen-Rechner 301 ist dazu eingerichtet, eine Mobilfunk-Nachricht eines Mobilfunkendgerätes 101 zu empfangen. Handelt es sich hierbei um eine MMS, die an ein anderes Mobilfunkendgerät 101 gerichtet ist, so leitet sie diese an den zweiten Schnittstellen-Rechner 303 weiter, der die Mobilfunk-Nachricht schließlich über die Basisstation 102 an das entsprechende Mobilfunkendgerät 101 weiterleitet. Im vorliegenden Ausführungsbeispiel stellt der erste Schnittstellen-Rechner 301 ein sogenanntes MMS-Proxy-Relay dar. Der zweite Schnittstellen-Rechner 303 hat die Funktionalität eines aus dem Stand der Technik prinzipiell bekannten MMS-Servers.

Ist die Mobilfunk-Nachricht eines Mobilfunkendgerätes 101 hingegen an einen E-Mail-Empfänger, mithin an einen Rechner in dem Festnetz-Kommunikationsnetz 200 gerichtet, so überträgt der erste Schnittstellen-Rechner 301 die Mobilfunk-Nachricht an den Zwischenspeicher-Rechner 302. Wie eingangs bereits erwähnt, liegt der Erfindung der Gedanke zugrunde, dass die Mobilfunk-Nachricht Multimedia-Daten enthält, die von dem Mobilfunkendgerät 101 einem Peer-to-Peer-Dienst zur Verfügung gestellt werden soll. Der die Funktion eines Peer-to-Peer-Proxys aufweisende Zwischenspeicher-Rechner 302 weist erfindungsgemäß zu diesem Zweck eine Einrichtung 305 auf, die die Teilnehmer-Absenderadresse, d.h. das absendende Mobilfunkendgerät 101, erkennt und gegebenenfalls separiert. Die Teilnehmer-Absenderadresse könnte das Format "Teilnehmer-Telefonnummer@(Betreibername.Netzname)" aufweisen. Die Einrichtung 305 ist weiterhin in der Lage, das von dem Mobilfunkendgerät 101 gewünschte Peer-to-Peer-Kommunikationssystem, z.B. aus der "Betreff"-Zeile der Mobilfunk-Nachricht zu erkennen und die Nachricht an den entsprechenden Dienst in dem Festnetz-Kommunikationsnetz 200 weiter zu leiten. Die Einrichtung 305 ist weiterhin in der Lage, Metadaten (Beschreibungs-Text des Inhaltes, Bilder, Sound, Video) zu erkennen. Es ist hier ebenfalls möglich, Inhalte der Mobilfunk-Nachricht zu konvertieren. Gedacht ist dabei insbesondere an das Entpacken von komprimierten Daten. Weiterhin können benutzerspezifische Ergänzungen, wie z.B. der Name des Inhaltes, Zugriffsrechte und Gruppen sowie die Speicher/Verweildauer auf dem Zwischenspeicher-Rechner 302, d.h. genauer in dem Speicher 304, erkannt werden. Nach dem Separieren und Erkennen der oben genannten Inhalte der Mobilfunk-Nachricht können diese in eine benutzer-unabhängige Peer-to-Peer-Sitzung übernommen, d.h. für andere Nutzer zur Verfügung gestellt werden.

Die Einrichtung in dem Zwischenspeicher-Rechner 302 ermöglicht damit die Integration des Inhaltes der MMS in ein Peer-to-Peer-System, wodurch diese lexikalisch auffindbar wird. Insbesondere sind keine Änderungen beim Mobilfunkendgerät oder dem MMS-System selbst notwendig.

Der Zwischenspeicher-Rechner 302 weist eine weitere Einrichtung 306 auf, welche es einem Mobilfunkendgerät 101 ermöglicht, an einen Peer-to-Peer-Dienst teilzunehmen. Die Teilnahme erfolgt dabei bevorzugt mittels des weit verbreiteten Systems der MMS. Nachdem ein Mobilfunkendgerät eine Anforderungsnachricht an einen Peer-to-Peer-Dienst gesendet hat, wobei in dieser als Empfänger das Mobilfunkendgerät selbst angegeben wurde, können das oder die Ergebnisse im MMS-Format an das Mobilfunkendgerät gesendet werden. Diesen Dienst kann der Betreiber des Mobilfunk-Kommunikationsnetzes erbringen, da sich der Zwischenspeicher-Rechner 302 und die darin befindliche Einrichtung 306 in dessen Zugriffsreichweite befinden. In der Einrichtung 306 werden die gemäß einem Peer-to-Peer-Kommunikationsprotokoll vorliegenden Nachrichten in das von einem Mobilfunkendgerät 101 verarbeitbare MMS-Format umgewandelt, und an den zweiten Schnittstellen-Rechner 303 übertragen, der diese in bekannter Weise über die Basisstation 202 an das anfordernde Mobilfunkendgerät 101 senden kann.

Gegenüber dem Stand der Technik muss dabei lediglich der Zwischenspeicher-Rechner 302 durch die Einrichtung 306 modifiziert werden, welche den Zwischenspeicher-Rechner 302 (Peer-to-Peer-Proxy-Rechner) in die Lage versetzt, folgende Dienste durchzuführen:
- Die Einrichtung 306 ermöglicht es, Antworten eines Peer-to-Peer-Dienstes zu interpretieren und einen Download der gefundenen Daten von dem jeweiligen Rechner aus dem Festnetz-Kommunikationsnetz 200 durchzuführen und die Daten lokal (in dem Speicher 304) zu speichern. Entgegen der üblichen Vorgehensweise, die gefundenen Daten später über das Festnetz durch den Benutzer abrufen zu lassen, können die Daten anhand von benutzerspezifischen Einstellungen (Profilen) weiter behandelt werden, um den Nutzer eines Mobilfunkendgerätes die Nutzung der Daten auf diesem zu erlauben oder eine Art "Vorschau-Charakter" zu haben.
- Insbesondere wird in der Einrichtung 306 eine Prüfung durchgeführt, ob die Daten auf dem mobilen Gerät des Benutzers darstellbar sind und gegebenenfalls eine Konvertierung durchgeführt werden muss. Zum Beispiel wird ein großes Bild in ein kleineres, auf dem Display des Mobilfunkendgerätes darstellbares Bild umgerechnet.
- Die konvertierten Daten werden dann, je nach Benutzerprofil, an den zweiten Schnittstellen-Rechner 303 weiter geleitet. Dieser sendet eine SMS oder MMS-Nachricht an das Mobilfunkendgerät, mit welcher der Nutzer über die Bereitstellung der Daten informiert wird. Alternativ wird eine sogenannte "Push"-Nachricht direkt an das Mobilfunkendgerät übertragen, um das Vorhandensein der Nachricht anzuzeigen und einen Download durch das Mobilfunkendgerät selbst zu veranlassen.

Durch die Erfindung wird der Datenaustausch zwischen unmodifizierten, MMS-fähigen Mobilfunkendgeräten und beliebigen, Internet-basierten Peer-to-Peer-Diensten möglich. Die Kombination von Mobilfunk-Nachricht und Nachrichten gemäß einem Peer-to-Peer-Kommunikationsprotokoll können ohne Eingriffe in bestehende Standards erfolgen. Als Mobilfunk-Nachrichten werden hierbei insbesondere MMS-Nachrichten bevorzugt, da diese zur Übertragung von Multimedia Dateien geeignet sind. Die Erfindung könnte jedoch prinzipiell auch mit anderen Arten von Mobilfunk-Nachrichten erfolgen.

Zur Nutzung bzw. Darstellung der von einem Peer-to-Peer-Dienst bereitgestellten Informationen kann wahlweise durch den Nutzer eines Mobilfunkendgerätes entweder eine Vorschau oder eine direkte Nutzung der Inhalte auf dem Mobilfunkendgerät erfolgen.

Die Erfindung ermöglicht ein kontrolliertes Zurverfügungstellen von Mobilfunk-Nachrichten in Internet-basierten Peer-to-Peer-Kommunikationsnetzen.

Dabei wird vorhandene Technologie effizient genutzt, wodurch keine unnötige Belastung des mobilen Netzes bzw. der Luft-Schnittstellen durch den einem Peer-to-Peer-System immanenten, hochbitratigen Datenverkehr erfolgt.

## Patentansprüche

1. Verfahren zum Verarbeiten einer von einem Mobilfunkendgerät (101) eines Mobilfunk-Kommunikationsnetzes (100) einem Nachrichtenwandlungs-Rechner zugeführten MMS-Nachricht, **dadurch gekennzeichnet, dass** eine Umsetzung der MMS-Nachricht gemäß einem Peer-to-Peer-Kommunikationsprotokoll vorgenommen wird.

2. Verfahren nach Anspruch 1, bei dem die Umsetzung eine Auffindbarmachung von Inhalten der MMS-Nachricht in einem Peer-to-Peer-Dienst umfasst.

3. Verfahren nach Anspruch 1 oder 2, bei dem die Umsetzung eine Bildung einer Peer-to-Peer-Nachricht umfasst, wobei die Peer-to-Peer-Nachricht an einen Rechner (201 ... 205, 211 ... 213) eines Festnetz-Kommunikationsnetzes (100) übertragen wird.

4. Verfahren zum Verarbeiten einer von einem Rechner (201 ... 205, 211 ... 213) eines Festnetz-Kommunikationsnetzes (100) einem Nachrichtenwandlungs-Rechner zugeführten Peer-to-Peer-Nachricht gemäß einem der vorangehenden Ansprüche, bei dem aus einer von einem Mobilfunkendgerät (101) angeforderten Peer-to-Peer-Nachricht eine MMS-Nachricht gebildet wird, die an das Mobilfunkendgerät (101) übertragen wird.

5. Nachrichtenwandlungs-Rechner, **dadurch gekennzeichnet, dass** dieser ausgestaltet ist, eine Umsetzung einer von einem Mobilfunkendgerät (101) eines Mobilfunk-Kommunikationsnetzes (100) ihm zugeführte MMS-Nachricht gemäß einem Peer-to-Peer-Kommunikationsprotokoll vorzunehmen.

6. Nachrichtenwandlungs-Rechner gemäß Anspruch 5, **dadurch gekennzeichnet, dass** dieser aus einer MMS-Nachricht eines Mobilfunkendgeräts (101) eine Peer-to-Peer-Nachricht gemäß dem Peer-to-Peer-Kommunikationsprotokoll zu bilden, so dass diese an einen Rechner (201 ... 205, 211 ... 213) eines Festnetz-Kommunikationsnetzes (200) übertragbar ist und/oder aus einer von einem Mobilfunkendgerät (101) angeforderten Peer-to-Peer-Nachricht eine MMS-Nachricht zu bilden, so dass diese an das Mobilfunkendgerät (101) übertragbar ist.

7. Kommunikationssystem mit
- einem Mobilfunk-Kommunikationsnetz (100) mit zumindest einem Mobilfunkendgerät (101),
- einem Festnetz-Kommunikationsnetz (200) mit zumindest einem Rechner (201... 205,211 ... 213),
- einem zumindest einen Rechner (301 ... 303) aufweisenden Vermittlungsnetzwerk (300), das mit dem Festnetz-Kommunikationsnetz (200) und dem Mobilfunk-Kommunikationsnetz (100) gekoppelt ist, mit einem Nachrichtenwandlungs-Rechner gemäß Anspruch 5 oder 6.

8. Kommunikationssystem nach Anspruch 7,
**dadurch gekennzeichnet, dass** der Nachrichtenwandlungs-Rechner ausgestaltet ist, eine Anforderungsnachricht seitens des Mobilfunkendgeräts (101), in der eine oder mehrere Peer-to-Peer-Nachrichten angefordert werden, zu ermitteln, von einem der Rechner des Festnetz-Kommunikationsnetzes (200) anzufordern und zwischenzuspeichern.

9. Kommunikationssystem nach Anspruch 7 oder 8,
**dadurch gekennzeichnet, dass** der Nachrichtenwandlungs-Rechner in einem Zwischenspeicher-Rechner (302) des Vermittlungsnetzwerks (300) angeordnet ist, der mit dem Festnetz-Kommunikationsnetz (200) gekoppelt ist.

10. Kommunikationssystem nach einem der Ansprüche 7 bis 9,
**dadurch gekennzeichnet, dass** der Zwischenspeicher-Rechner (302) ein Peer-to-Peer-Proxy-Rechner ist.

11. Kommunikationssystem nach einem der Ansprüche 7 bis 10,
**dadurch gekennzeichnet, dass** der Zwischenspeicher-Rechner (302) mit einem ersten Schnittstellenrechner (301) gekoppelt ist, der eine an einen e-mail-Empfänger gerichtete MMS-Nachricht von einem Mobilfunkendgerät empfängt und dem Zwischenspeicher-Rechner (302) zuführt.

12. Kommunikationssystem nach einem der Ansprüche 7 bis 11, **dadurch gekennzeichnet, dass** der Zwischenspeicher-Rechner (302) mit einem zweiten Schnittstellenrechner (303) gekoppelt ist, der die MMS-Nachricht oder eine Information über die Zieladresse der MMS-Nachricht an das Mobilfunkendgerät (101) sendet.

13. Kommunikationssystem nach einem der Ansprüche 7 bis 12,
**dadurch gekennzeichnet, dass** der Nachrichtenwandlungs-Rechner derart ausgestaltet ist, dass sie Dateianhänge der MMS-Nachricht von derselben separieren kann.

14. Kommunikationssystem nach einem der Ansprüche 7 bis 13,
**dadurch gekennzeichnet, dass** der Nachrichtenwandlungs-Rechner derart ausgestaltet ist, dass sie aus der MMS-Nachricht Peer-to-Peer-Kontexte mit Objekt und Beschreibung erzeugen kann.

15. Kommunikationssystem nach einem der Ansprüche 7 bis 14,
**dadurch gekennzeichnet, dass** der Nachrichtenwandlungs-Rechner derart ausgestaltet ist, dass sie die MMS-Nachricht einem bestimmten Peer-to-Peer-System zuordnen kann.

16. Kommunikationssystem nach einem der Ansprüche 7 bis 15,
**dadurch gekennzeichnet, dass** der Nachrichtenwandlungs-Rechner derart ausgestaltet ist, dass sie bei der Wandlung der Peer-to-Peer-Nachricht in die MMS-Nachricht die Eingabe/Ausgabefähigkeiten des Mobilfunkendgeräts (101) berücksichtigt.

17. Kommunikationssystem nach einem der Ansprüche 7 bis 16,
**dadurch gekennzeichnet, dass** der Nachrichtenwandlungs-Rechner derart ausgestaltet ist, dass sie vor dem Senden der MMS-Nachricht ermittelt, ob der Kontext der Peer-to-Peer-Nachricht mit übermittelt werden soll.

## Claims

1. Method for processing an MMS message fed to a message conversion computer from a mobile radiocommunication terminal device (101) in a mobile radiocommunication network (100),
**characterised in that** the MMS message undergoes a conversion in accordance with a peer-to-peer communication protocol.

2. Method in accordance with claim 1, whereby the conversion includes making the contents of the MMS message such that they can be found in a peer-to-peer service.

3. Method in accordance with claim 1 or 2, with which the conversion includes the formation of a peer-to-peer message, whereby the peer-to-peer message is transmitted to a computer (201 ... 205, 211 ... 213) in a fixed-line communication network (100) .

4. Method for processing a peer-to-peer message, fed from a computer (201 ... 205, 211 ... 213) in a fixed-line communication network (100) to a message conversion computer, in accordance with one of the preceding claims, by which an MMS message is formed from a peer-to-peer message requested by a mobile radiocommunication terminal device (101) and is transmitted to the mobile radiocommunication terminal device (101) .

5. Message conversion computer, **characterised in that** it is equipped to undertake a conversion of an MMS message, fed to it from a mobile radiocommunication terminal device (101) in a mobile radiocommunication network (100), in accordance with a peer-to-peer communication protocol.

6. Message conversion computer in accordance with claim 5,
**characterised in that** it is equipped to form, from an MMS message from a mobile radiocommunication terminal device (101), a peer-to-peer message conforming to the peer-to-peer communication protocol, so that this message is capable of being transmitted to a computer (201 ... 205, 211 ... 213) in a fixed-line communication network (200) and/or to form, from a peer-to-peer message requested by a mobile radiocommunication terminal device (101), an MMS message, so that this message is capable of being transmitted to the mobile radiocommunication terminal device (101).

7. Communication system with
- a mobile radiocommunication network (100) with at least one mobile radiocommunication terminal device (101),
- a fixed-line communication network (200) with at least one computer (201 ... 205, 211 ... 213),
- a switching network (300), with at least one computer (301
... 303), which is coupled to the fixed-line communication network (200) and to the mobile radiocommunication network (100), with a message conversion computer in accordance with claim 5 or 6.

8. Communication system in accordance with claim 7
**characterised in that** the message conversion computer is designed to recognise a request message from the mobile radiocommunication terminal device (101) in which one or more peer-to-peer messages are requested, to request it from one of the computers in the fixed-line communication network (200) and to store it temporarily.

9. Communication system in accordance with claim 7 or 8
**characterised in that** the message conversion computer is arranged in a temporary storage computer (302), in the switching network (300), which is coupled to the fixed-line communication network (200).

10. Communication system in accordance with one of the claims 7 to 9,
**characterised in that** the temporary storage computer (302) is a peer-to-peer proxy computer.

11. Communication system in accordance with one of the claims 7 to 10,
**characterised in that** the temporary storage computer (302) is coupled to a first interface computer (301), which receives an MMS message directed to an e-mail receiver from a mobile radiocommunication terminal device and feeds it to the temporary storage computer (302).

12. Communication system in accordance with one of the claims 7 to 11,
**characterised in that** the temporary storage computer (302) is coupled to a second interface computer (303) which sends the MMS message, or an item of information about the destination address of the MMS message, to the mobile radiocommunication terminal device (101).

13. Communication system in accordance with one of the claims 7 to 12,
**characterised in that** the message conversion computer takes a form such that it can separate files appended to the MMS message from the message itself.

14. Communication system in accordance with one of the claims 7 to 13,
**characterised in that** the message conversion computer takes a form such that it can generate peer-to-peer contexts, with object and description, from the MMS message.

15. Communication system in accordance with one of the claims 7 to 14,
**characterised in that** the message conversion computer takes a form such that it can assign the MMS message to a particular peer-to-peer system.

16. Communication system in accordance with one of the claims 7 to 15,
**characterised in that** the message conversion computer takes a form such that in converting the peer-to-peer message into the MMS message it takes into account the input/output capabilities of the mobile radiocommunication terminal device (101) .

17. Communication system in accordance with one of the claims 7 to 16,
**characterised in that** the message conversion computer takes a form such that before sending the MMS message it determines whether the context of the peer-to-peer message should be included with the communication.

## Revendications

1. Procédé de traitement d'un message MMS envoyé d'un terminal de radiotéléphonie mobile (101) d'un réseau de radiocommunications mobiles (100) à un ordinateur de conversion de messages, **caractérisé en ce qu'**une conversion du message MMS est réalisée selon un protocole de communication Peer-to-Peer.

2. Procédé selon la revendication 1, dans lequel la conversion comprend une opération permettant de rendre localisables des contenus du message MMS dans un service Peer-to-Peer.

3. Procédé selon la revendication 1 ou 2, dans lequel la conversion comprend une formation d'un message Peer-to-Peer, le message Peer-to-Peer étant transmis à un ordinateur (201 ... 205, 211 ... 213) d'un réseau de communication fixe (100).

4. Procédé de traitement d'un message Peer-to-Peer envoyé d'un ordinateur (201 ... 205, 211 ... 213) d'un réseau de communication fixe (100) à un ordinateur de conversion de messages selon une des revendications précédentes, dans lequel on forme, à partir d'un message Peer-to-Peer demandé par un terminal de radiotéléphonie mobile (101), un message MMS qui est transmis au terminal de radiotéléphonie mobile (101).

5. Ordinateur de conversion de messages, **caractérisé en ce que** cet ordinateur est configuré pour procéder à une conversion d'un message MMS qui lui est envoyé par un terminal de radiotéléphonie mobile (101) d'un réseau de radiocommunications mobiles (100) selon un protocole de communication Peer-to-Peer.

6. Ordinateur de conversion de messages selon la revendication 5, **caractérisé en ce que** cet ordinateur est configuré pour former un message Peer-to-Peer selon le protocole de communication Peer-to-Peer à partir d'un message MMS d'un terminal de radiotéléphonie mobile (101), de manière à ce que ce message puisse être transmis à un ordinateur (201 ... 205, 211 ... 213) d'un réseau de communication fixe (200) et/ou pour former un message MMS à partir d'un message Peer-to-Peer demandé par un terminal de radiotéléphonie mobile (101), de manière à ce que ce message puisse être transmis au terminal de radiotéléphonie mobile (101).

7. Système de communication comprenant
- un réseau de radiocommunications mobiles (100) comprenant au moins un terminal de radiotéléphonie mobile (101),
- un réseau de communication fixe (200) comprenant au moins un ordinateur (201 ... 205, 211 ... 213),
- un réseau de commutation (300) comprenant au moins un ordinateur (301 ... 303) , qui est couplé au réseau de communication fixe (200) et au réseau de radiocommunications mobiles (100), avec un ordinateur de conversion de messages selon la revendication 5 ou 6.

8. Système de communication selon la revendication 7, **caractérisé en ce que** l'ordinateur de conversion de messages est configuré pour détecter un message de demande de la part du terminal de radiotéléphonie mobile (101) dans lequel un ou plusieurs message/s Peer-to-Peer est/sont demandé/s, pour le/les demander à un des ordinateurs du réseau de communication fixe (200) et le/les enregistrer dans une mémoire intermédiaire.

9. Système de communication selon la revendication 7 ou 8, **caractérisé en ce que** l'ordinateur de conversion de messages est situé dans un ordinateur de stockage intermédiaire (302) du réseau de commutation (300) qui est couplé au réseau de communication fixe (200).

10. Système de communication selon l'une des revendications 7 à 9, **caractérisé en ce que** l'ordinateur de stockage intermédiaire (302) est un ordinateur proxy Peer-to-Peer.

11. Système de communication selon l'une des revendications 7 à 10, **caractérisé en ce que** l'ordinateur de stockage intermédiaire (302) est couplé à un premier ordinateur d'interface (301) qui reçoit un message MMS d'un terminal de radiotéléphonie mobile adressé à un récepteur de courrier électronique et l'envoie à l'ordinateur de stockage intermédiaire (302) .

12. Système de communication selon l'une des revendications 7 à 11, **caractérisé en ce que** l'ordinateur de stockage intermédiaire (302) est couplé à un second ordinateur d'interface (303) qui envoie le message MMS ou une information sur l'adresse cible du message MMS au terminal de radiotéléphonie mobile (101).

13. Système de communication selon l'une des revendications 7 à 12, **caractérisé en ce que** l'ordinateur de conversion de messages est configuré de manière à pouvoir séparer les fichiers attachés du message MMS de ce même message.

14. Système de communication selon l'une des revendications 7 à 13, **caractérisé en ce que** l'ordinateur de conversion de messages est configuré de manière à pouvoir générer des contextes Peer-to-Peer avec un objet et une description à partir du message MMS.

15. Système de communication selon l'une des revendications 7 à 14, **caractérisé en ce que** l'ordinateur de conversion de messages est configuré de manière à pouvoir assigner le message MMS à un système Peer-to-Peer déterminé.

16. Système de communication selon l'une des revendications 7 à 15, **caractérisé en ce que** l'ordinateur de conversion de messages est configuré de manière à prendre en compte les capacités d'entrée/sortie du terminal de radiotéléphonie mobile (101) lors de la conversion du message Peer-to-Peer en message MMS.

17. Système de communication selon l'une des revendications 7 à 16, **caractérisé en ce que** l'ordinateur de conversion de messages est configuré de manière à déterminer, avant l'envoi du message MMS, si le contexte du message Peer-to-Peer doit être envoyé également.
